# EUROPÄISCHE PATENTANMELDUNG

(11) **EP 0 872 318 A2**
(43) Veröffentlichungstag der Anmeldung: **21.10.1998**
(21) Anmeldenummer: 98105479.4
(22) Anmeldetag: 26.03.1998
(51) Int. Cl.: B29B 15/10, B29C 63/34, F16L 55/165

(54) **Imprägnierverfahren und -vorrichtung**

(30) Priorität: 15.04.1997 DE 19715615; 03.09.1997 DE 19738395
(71) Anmelder: BKP Berolina Polyester GmbH & Co. KG, 13591 Berlin (DE)
(72) Erfinder: Bach, Peter, 13591 Berlin (DE); Auer, Helmut, 14089 Berlin (DE); Odenwald, Ralf, 16727 Velten (DE)
(74) Vertreter: KOHLER SCHMID + PARTNER

(57) **Zusammenfassung**

Bei einem Verfahren zum Imprägnieren eines mehrlagigen Schlauchs (3), insbesondere zur Sanierung von im Erdreich verlegten Kanalrohren, wobei der etwa horizontal ausgerichtete Schlauch (3) in axialer Richtung (2) gefördert wird und eine zwischen einer jeweils im Querschnitt geschlossenen Außen- (5) und Innenlage (6) befindliche Zwischenlage (7) aufweist, welche in Förderrichtung (2) auf einer Imprägnierstrecke (d) mit aushärtbarem Material, insbesondere Harz (4), getränkt wird, wird zumindest die Zwischenlage (7) des Schlauchs (3) auf der Imprägnierstrecke (d) rechtwinklig zur Förderrichtung, insbesondere etwa senkrecht, vorzugsweise flach, zusammengedrückt oder zusammengezogen gefördert und wird auf der Imprägnierstrecke (d) aushärtbares Material in einen zwischen Innenlage (6) und Zwischenlage (7) befindlichen Innenraum (9) eingeleitet, wobei die Innenlage (6) zumindest auf einem Abschnitt der Imprägnierstrecke (d) von der Zwischenlage (7) beabstandet gehalten wird. Außerdem wird vor der Imprägnierstrecke (d) in dem Innenraum (9) ein Unterdruck erzeugt. Dadurch wird auf der Imprägnierstrecke eine wirkungsvollere Harztränkung der Zwischenlage des Schlauchs erzielt.

## Beschreibung

Die vorliegende Erfindung betrifft ein Verfahren zum Imprägnieren eines mehrlagigen Schlauchs, insbesondere zur Sanierung von im Erdreich verlegten Kanalrohren, wobei der etwa horizontal ausgerichtete Schlauch in axialer Richtung gefördert wird und eine zwischen einer jeweils im Querschnitt geschlossenen Außen- und Innenlage befindliche Zwischenlage aufweist, welche in Förderrichtung auf einer Imprägnierstrecke mit aushärtbarem Material, insbesondere Harz, getränkt wird.

Ein derartiges Imprägnierverfahren und eine entsprechende Imprägniervorrichtung sind beispielsweise durch die DE 44 27 633 A1 bekanntgeworden.

Nicht begehbare schadhafte Rohrleitungen können mit sogenannten Relining-Verfahren saniert werden, bei denen ein aus aushärtbaren Formmassen bestehender Schlauch in eine schadhafte Rohrleitung eingezogen und dort zu einem Neurohr ausgehärtet wird.

Bei dem aus der DE 44 27 633 A1 bekannten Imprägnierverfahren wird der Schlauch in einer Imprägniervorrichtung zwischen einem Außen-Kalibrierrohr und einem Innen-Kalibrierrohr geführt und dabei eine Zwischenlage des Schlauchs auf einer Imprägnierstrecke von innen her harzdurchtränkt. Dazu weist das Innen-Kalibrierrohr mittig über den Umfang eine Harzimprägnierkammer bildende Ausnehmung auf. Die Harzzuführung in diese Imprägnierkammer erfolgt über den Umfang des Innen-Kalibrierrohrs angeordnete Einspritzdüsen. Der zwischen den Innen- und Außen-Kalibrierrohren in die Imprägnierkammer ziehbare Schlauch wird von innen her unter Druck harzgetränkt. Da der Schlauch das Innen-Kalibrierrohr ganz umgibt, muß dieses durch im Innern des Schlauchs verlaufende Seile gehalten werden.

Bei diesem bekannten Imprägnierverfahren wird der Schlauch vor der Imprägnierstrecke rohrförmig aufgerichtet, zwischen Außen- und Innen-Kalibrierrohr harzgetränkt und hinter der Imprägnierstrecke wieder flachgepreßt. Das dabei in die Zwischenlage imprägnierte Harz strömt aufgrund der Schwerkraft aus höher liegenden Umfangsabschnitten des während des Imprägnierens aufgerichteten Schlauchs in den untersten Umfangsabschnitt ab und sammelt sich dort an. Dieses Abfließen des Harzes wirkt einer gewünschten, um den Schlauchumfang homogenen Harztränkung entgegen.

Der vorliegenden Erfindung liegt demgegenüber die Aufgabe zugrunde, ein Verfahren der eingangs genannten Art dahingehend weiterzubilden, daß auf der Imprägnierstrecke eine wirkungsvollere Harztränkung der Zwischenlage des Schlauchs erzielt werden kann.

Diese Aufgabe wird in einem ersten Aspekt der Erfindung dadurch gelöst, daß zumindest die Zwischenlage des Schlauchs auf der Imprägnierstrecke rechtwinklig zur Förderrichtung, insbesondere etwa senkrecht, vorzugsweise flach, zusammengedrückt oder zusammengezogen gefördert wird und daß auf der Imprägnierstrecke aushärtbares Material in einen zwischen Innenlage und Zwischenlage befindlichen Innenraum eingeleitet wird, wobei die Innenlage zumindest auf einem Abschnitt der Imprägnierstrecke von der Zwischenlage beabstandet ist.

Durch die während des Imprägnierens flache Form des Schlauchs wird der Schwerkrafteinfluß auf das in die Zwischenlage imprägnierte Harz minimiert, wodurch eine auf seinem Umfang gleichmäßige Imprägnierung des Schlauchs erreicht werden kann. Außerdem ist weder ein Außen- noch ein InnenKalibrierrohr, welches innerhalb des Schlauchs schwebend gehalten werden muß, erforderlich, wodurch das Imprägnierverfahren konstruktionsmäßig sehr vereinfacht wird. Insbesondere wenn Harz in den Innenraum nur unterhalb der Innenlage eingeleitet wird, kann sich diese durch ihre Beabstandung nicht an die Zwischenlage anlegen und so das Eindringen des Harzes in die Zwischenlage behindern.

Die obengenannte Aufgabe wird in einem weiteren Aspekt der Erfindung bei dem eingangs genannten Imprägnierverfahren auch dadurch gelöst, daß auf der Imprägnierstrecke aushärtbares Material, insbesondere Harz, in einen zwischen Innenlage und Zwischenlage befindlichen Innenraum eingeleitet wird und daß vor der Imprägnierstrecke in dem Innenraum ein Unterdruck erzeugt wird.

Durch den im Zwischenraum herrschenden Unterdruck wird auch auf der Imprägnierstrecke innerhalb der Zwischenlage ein Unterdruck erzeugt, wodurch das Harz gezielt und schneller in die Zwischenlage eindringen kann.

Bei einer besonders bevorzugten Ausführung der beiden genannten Imprägnierverfahren wird im Innenraum befindliches überschüssiges aushärtbares Material am Ende der Imprägnierstrecke in Förderrichtung durch Zusammenpressen oder -ziehen des Schlauchs zurückgehalten. Durch Zusammenpressen des Schlauchs und insbesondere der Zwischenlage läßt sich der Querschnitt des Innenraums bis auf Null verringern und sich so der Harzfluß in Förderrichtung einstellen.

Eine weitere Ausführung des erfindungsgemäßen Imprägnierverfahrens ist dadurch gekennzeichnet, daß der Schlauch auf der Imprägnierstrecke in Förderrichtung geneigt bzw. senkrecht ausgerichtet ist. Über diese Neigung des Schlauchs kann ein Rückfließen von Harz entgegen der Förderrichtung verhindern werden.

Als eine weitere vorteilhafte Ausführung ist vorgesehen, daß das Einleiten des aushärtbaren Materials in den Innenraum erst am Ende der Imprägnierstrecke erfolgt. Das Harz tritt dann in bereits im Innenraum befindliches Harz ein, wodurch Lufteinschlüsse im Harz, welche später zu Undichtigkeiten im ausgehärteten Schlauch führen können, verhindert werden.

Die vorliegende Erfindung betrifft auch eine Vorrichtung zum Imprägnieren einer Zwischenlage eines mehrlagigen Schlauchs, insbesondere zur Sanierung von im Erdreich verlegten Kanalrohren, wobei der Schlauch etwa horizontal ausgerichtet durch die Imprägniervorrichtung in axialer Richtung gefördert wird und eine zwischen einer jeweils im Querschnitt geschlossenen Außen- und Innenlage befindliche Zwischenlage aufweist, welche in Förderrichtung auf einer Imprägnierstrecke mit aushärtbarem Material getränkt wird.

Der vorliegenden Erfindung liegt auch die Aufgabe zugrunde, eine Vorrichtung dieser Art dahingehend weiterzubilden, daß auf der Imprägnierstrecke eine wirkungsvollere Harztränkung der Zwischenlage des Schlauchs erzielt werden kann.

Diese Aufgabe wird erfindungsgemäß bei einer derartigen Vorrichtung gelöst durch eine zumindest die Zwischenlage auf der Imprägnierstrecke in eine rechtwinklig zur Förderrichtung, insbesondere etwa senkrecht zusammengedrückte oder zusammengezogene Lage zwingende Einrichtung und eine in einem Innenraum zwischen Innenlage und Zwischenlage angeordnete Leitung, die das aushärtbare Material über mindestens eine Austrittsöffnung in den Innenraum, vorzugsweise kontinuierlich, einleitet.

Um zumindest die Zwischenlage in eine flache Form zu zwingen, ist die Einrichtung ein vor der Imprägnierstrecke im Innenraum angeordnetes Aufweitungselement. Insbesondere wenn die erfindungsgemäße Imprägniervorrichtung Teil einer auch den Schlauch herstellenden Fertigungsstraße ist, kann das Aufweitungselement über ein innerhalb des Schlauchs angeordnetes Seil oder über die Leitung ortsfest gehalten sein. Die Leitung kann auch selbst als Aufweitungselement ausgebildet sein.

Bei einer ganz besonders bevorzugten Ausführungsform ist im Innenraum ein die Innenlage zumindest auf einem Abschnitt der Imprägnierstrecke von der Zwischenlage beabstandender Abstandshalter vorgesehen. Dieser Abstandshalter verhindert, daß die im Harz nach oben aufschwimmende oder nach unten absinkende Innenlage sich an die Zwischenlage anlegen und so deren Imprägnierung beeinträchtigen kann.

Als ganz besonders vorteilhafte Weiterbildung dieser Ausführungsform ist erfindungsgemäß vorgesehen, daß der Abstandshalter durch die im Innenraum angeordnete Leitung gebildet ist. Dadurch sind zur Beabstandung keine zusätzlichen Einbauteile erforderlich.

Dabei ist in einer ersten Ausgestaltung die Leitung oberhalb der Innenlage angeordnet. Da die Innenlage im allgemeinen aus einem Kunststoff mit einem geringerem spezifischem Gewicht als Harz gebildet ist, kann die vorhandene Leitung die sonst aufschwimmende Innenlage niederhalten.

In einer zweiten besonders bevorzugten Ausgestaltung weist die Leitung zwei Arme auf, zwischen denen die Innenlage geführt ist. Der eine Arm der Leitung kann sich dann oberhalb und der andere Arm unterhalb der Innenlage befinden, so daß diese im Zwischenraum zwischen beiden Armen geführt und an einem Aufschwimmen innerhalb des ausgetretenen Harzes gehindert ist.

Vorzugsweise gabelt sich die Leitung nach außen in die zwei Arme, deren nach innen gerichtete Schenkel sich übergreifen. Weiterhin kann sich die Harzleitung nach außen auch in zwei Arme gabeln, die die Innenlage klammerförmig umgreifen, wodurch die Innenlage auch seitlich im Innenraum des Schlauchs geführt werden kann.

Damit die Innenlage auch seitlich durch die Arme der Leitung geführt ist, sind die freien Enden der Schenkel mit dem jeweils anderen Arm verbunden, z.B. angeschweißt.

Wenn sich dabei die Leitung über nahezu die gesamte Breite des Innenquerschnitts der zusammengedrückten oder zusammengezogenen Zwischenlage erstreckt, wird einerseits die Zwischenlage auch auf der gesamten Imprägnierstrecke in ihrer flachen Form gehalten und kann andererseits über entsprechende Austrittsöffnungen in der Leitung ein über den gesamten Innenumfang der Zwischenlage erfolgender Harzaustritt sichergestellt werden.

Bei besonders bevorzugten Ausführungsformen der Erfindung sind Austrittsöffnungen für das aushärtbare Material oberhalb und unterhalb der Innenlage vorgesehen, so daß ein Anlegen der Innenfolien an die Zwischenlage durch den jeweils dazwischen befindlichen oberen und unteren Harzsee wirkungsvoll verhindert wird.

Bei einer weiteren bevorzugten Ausführungsform ist die mindestens eine Austrittsöffnung der Leitung an ihrem in Förderrichtung hinteren Ende vorgesehen, so daß das Harz dann nur in bereits im Innenraum befindliches Harz ausströmt. Lufteinschlüsse im Harz, welche später zu Undichtigkeiten im ausgehärteten Schlauch führen können, können so verhindert werden.

Die Innenfolie kann auf einem möglichst langen axialen Abschnitt in der Imprägniervorrichtung geführt werden, wenn mindestens zwei in Förderrichtung hintereinander angeordnete Führungen für die Innenfolie vorgesehen sind.

Um den Imprägniervorgang noch weiter zu verbessern, ist bei einer ganz besonders bevorzugten Ausführungsform, die erfindungsgemäß auch in Alleinstellung vorgesehen sein kann, der Innenraum vor der Imprägnierstrecke, vorzugsweise über eine Unterdruckleitung, evakuierbar. Der dann auch auf der Imprägnierstrecke innerhalb der Zwischenlage herrschende Unterdruck bewirkt ein beschleunigtes Eindringen des Harzes in die Zwischenlage.

Bei einer vorteilhaften Weiterbildung dieser Ausführungsform ist im Innenraum, vorzugsweise möglichst unmittelbar, vor der Imprägnierstrecke, eine Druckmeßeinrichtung vorgesehen. Diese Druckmeßeinrichtung erlaubt das Überwachen des im Innenraum der Zwischenlage herrschenden Arbeitsdrucks und damit gleichzeitig auch eine Überprüfung der Schweißnaht der Außenfolie auf Dichtigkeit.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine erste Ausführungsform einer Imprägniervorrichtung zum Imprägnieren eines in seiner axialen Richtung geförderten mehrlagigen Schlauchs in einem senkrechten Längsschnitt gemäß I-I in Fig. 2;
- Fig. 2: eine Draufsicht auf die Imprägniervorrichtung der Fig. 1;
- Fig. 3: einen Querschnitt durch die Imprägniervorrichtung gemäß III-III in Fig. 2;
- Fig. 4: ein Ausführungsbeispiel eines den Schlauch am Ende der Imprägnierstrecke zusammenpressenden Walzenpaars; und
- Fig. 5: in einer der Fig. 1 entsprechenden Ansicht eine zweite Ausführungsform einer Imprägniervorrichtung in einem Längsschnitt gemäß V-V in Fig. 6;
- Fig. 6: eine Draufsicht auf die Imprägniervorrichtung der Fig. 5;
- Fig. 7: einen Querschnitt durch die Imprägniervorrichtung gemäß VII-VII in Fig. 6.
- Fig. 8: in leicht perspektivischer Draufsicht eine dritte Ausführungsform einer Imprägniervorrichtung; und
- Fig. 9: in einer Ansicht schräg von vorn ein viertes Ausführungsbeispiel einer Imprägniervorrichtung.

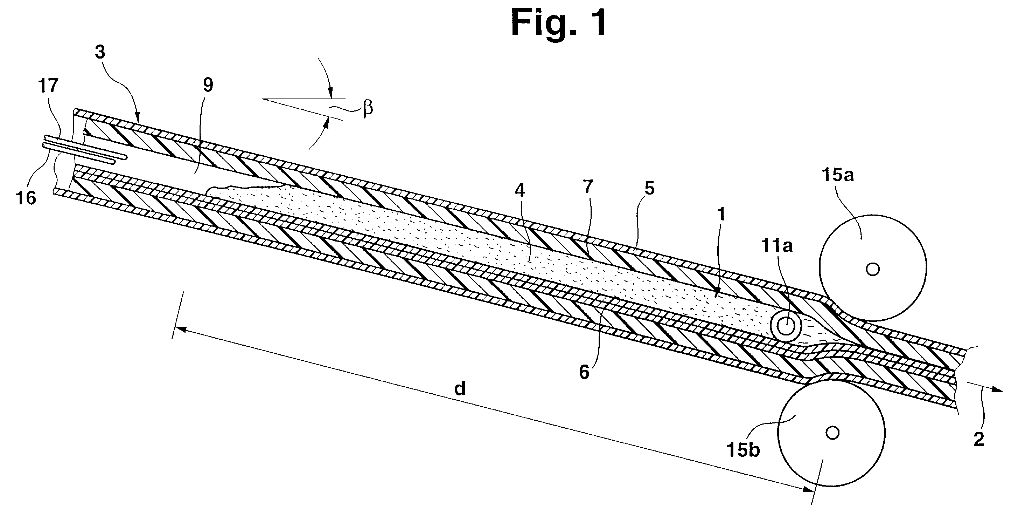

Die Fig. 1 zeigt eine Imprägniervorrichtung 1, mittels der die Wand eines in axialer Bearbeitungsrichtung 2 geförderten Schlauchs 3 mit einem aushärtbaren Material, z.B. Harz, 4 getränkt bzw. imprägniert wird. Im Ausführungsbeispiel ist diese Imprägniervorrichtung 1 Teil einer auch den Schlauch 3 bzw. seine geschlossenen Außen- und Innenlagen 5, 6 herstellenden Fertigungsstraße, so daß innerhalb des Schlauchs 3 Leitungen oder Seile bis zur Imprägniervorrichtung 1 geführt werden können.

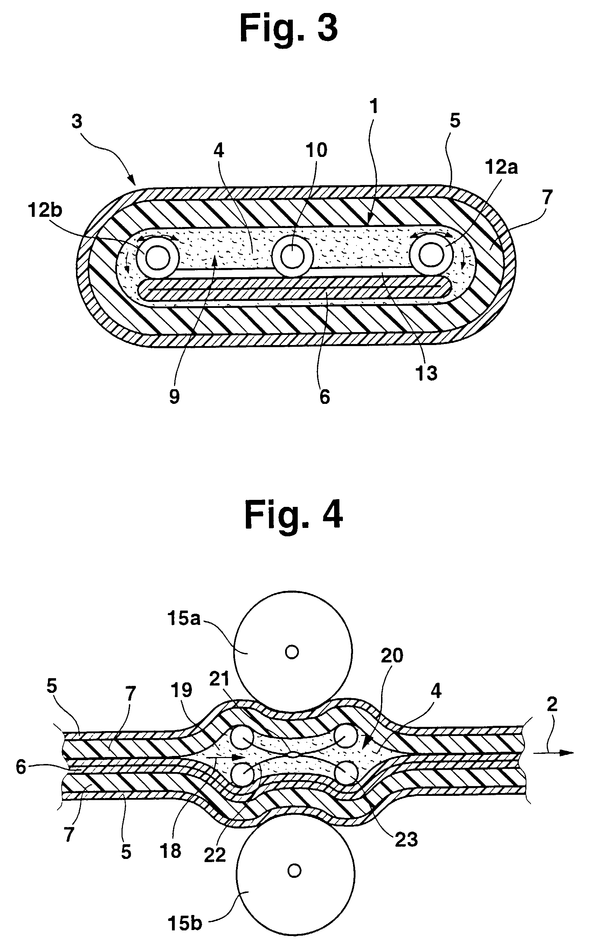

Wie besonders deutlich Fig. 3 zeigt, ist der Schlauch 3 mehrlagig durch im Querschnitt geschlossene Außen- (5) und Innenlagen 6 sowie eine dazwischen liegende Zwischenlage 7 aufgebaut. Die Außen- und Innenlagen 5, 6 können als Folienschläuche, die Zwischenlage 7 als saugfähiger Verstärkungsstoff, z.B. ein Glasfaservlies, ausgebildet sein, dessen zwei Längsenden in Umfangsrichtung überlappend übereinander gelegt sein können. Auf einer in Förderrichtung 2 vorgesehenen Imprägnierstrecke d wird diese Zwischenlage 7 mit dem Harz 4 getränkt.

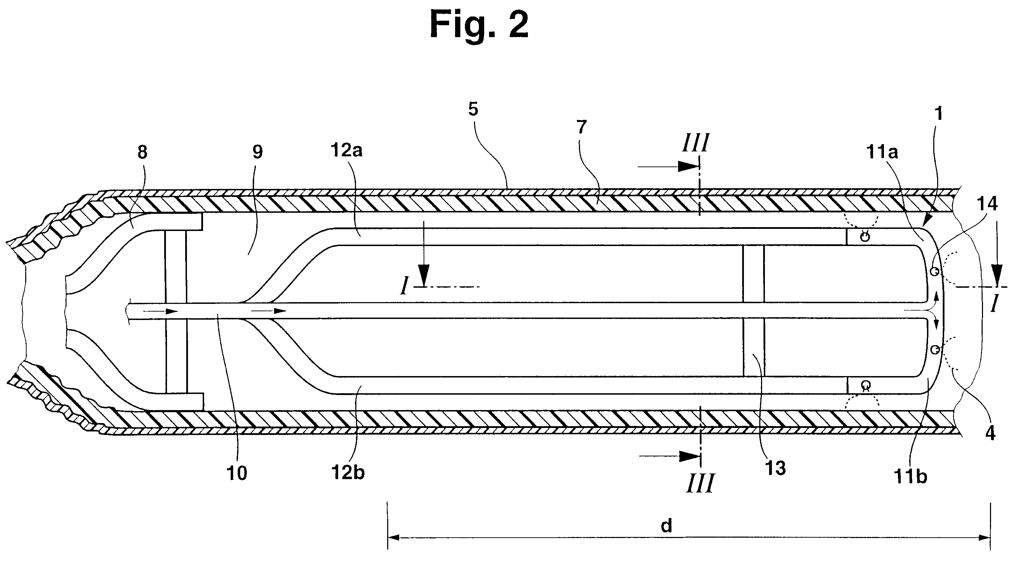

Wie Fig. 2 zeigt, befindet sich vor der Imprägnierstrecke d innerhalb der Zwischenlage 7 ein waagerecht wirkendes gabelförmiges Aufweitungselement 8, welches dort auf nicht dargestellte Weise ortsfest gehalten ist und den bis dahin noch mit undefiniertem Querschnitt geförderten Schlauch 3 vor der Imprägnierstrecke d in waagerechter Richtung nach außen aufweitet bzw. in etwa senkrechter Richtung zusammenzieht. Das seitlich wirkende Aufweitungselement 8 zwingt so zumindest die Zwischenlage 7 etwa in senkrechter Richtung in eine flache Querschnittsform (Fig. 3) mit einem offenen Innenraum 9, in dem die Innenlage 6, wie unten ausgeführt, von der Zwischenlage 7 beabstandet gehalten ist.

Dieser Innenraum 9 ist auf der Imprägnierstrecke d mit Harz 4 gefüllt, das über eine zwischen Innenlage 6 und Zwischenlage 7 im Schlauch 3 verlaufende Harzleitung 10 der Imprägniervorrichtung 1 aus einem Vorratsbehälter (nicht gezeigt) zugeleitet wird. Der Harzstrom ist durch Pfeile gekennzeichnet. Etwa am Ende der Imprägnierstrecke d gabelt sich die Harzleitung 10 rechtwinklig in zwei Leitungszweige 11a, 11b, die jeweils über einen parallelen und einen abgewinkelten Abschnitt eines Verbindungsschenkels 12a, 12b an stromaufwärtiger Stelle wieder an der Harzleitung 10 befestigt sind (Fig. 2). Die Verbindungsschenkel 12a, 12b führen kein Harz und weisen unterseitig einen die parallelen Abschnitte verbindenden Streifen 13 auf. Die zur Harzleitung 10 parallelen Abschnitte halten den Innenraum 9 entlang der Imprägnierstrecke d offen. Die Innenlage 6 ist bereits vor der Imprägnierstrecke d auf nicht dargestellte Weise flach zusammengefaltet und dann auf der Imprägnierstrecke d unterhalb der Harzleitung 10, der Verbindungsschenkel 12a, 12b und des Streifens 13 geführt.

Wie insbesondere Fig. 3 zeigt, strömt das Harz 4 über mehrere Austrittsöffnungen 14 in den Leitungszweigen 11a, 11b nach oben aus und kann in die Zwischenlage 7 eindringen. Dabei verhindern Harzleitung 10, Verbindungsschenkel 12a, 12b und insbesondere der Streifen 13, daß die Innenlage 6 aufgrund ihres geringeren spezifischen Gewichts im Harz 4 nach oben bis zur Anlage an die Zwischenlage 7 aufschwimmen kann. Durch dieses Niederhalten der Innenlage 6 auf der Imprägnierstrecke d ist sichergestellt, daß die Zwischenlage 7 vollflächig mit Harz 4 getränkt wird.

Am Ende der Imprägnierstrecke d sind zwei drehbar gelagerte Walzen 15a, 15b angeordnet, zwischen denen der Schlauch 3 flach zusammengepreßt hindurchgezogen wird. Durch diesen unmittelbare Preßvorgang wird Restluft aus der Zwischenlage 7 rausgepreßt und das innerhalb des Innenraums 10 befindliche, überschüssige Harz 4 in Förderrichtung 2 zurückgehalten. Außerdem läßt sich die in Förderrichtung 2 durchgelassene Harzmenge, z.B. für eine in Förderrichtung 2 nachfolgende Nachimprägnierung, über den Walzenabstand einstellen. So können mehrere Walzenpaare hintereinander angeordnet sein, wobei der jeweilige Walzenabstand in Abhängigkeit von der im Innenraum 9 vorhandenen überschüssigen Harzmenge und der übrigen Walzenabstände jeweils geregelt werden kann.

Über eine Unterdruckleitung 16 wird vor der Imprägnierstrecke d im Innenraum 9 ein Unterdruck erzeugt. Dadurch herrscht auch auf der Imprägnierstrecke d innerhalb der Zwischenlage 7 ein Unterdruck, wodurch das Harz 4 gezielt und schneller in diese eindringt. Über eine den vor der Imprägnierstrecke d im Innenraum 9 herrschenden Druck messende Druckmeßeinrichtung 17 läßt sich der Schlauch 3 auf Dichtigkeit prüfen und kann der zur Imprägnierung gewünschte Arbeitsdruck überwacht werden.

Indem der Schlauch 3 vor und auf der Impragnierstrecke d in Förderrichtung 2 unter einem Winkel β geneigt ist, wird das Rückfließen von Harz 4 entgegen der Förderrichtung 2 verhindert. Die Unterdruckleitung 15 ist so weit von der Imprägnierstrecke d entfernt, daß kein Harz 4 in die Unterdruckleitung gelangen kann. Durch die Neigung bildet sich ein Harzsee, in den weiteres Harz 4 aus den Austrittsöffnungen 14 einströmt, so daß sich im Harz 4 keine Lufteinschlüsse bilden können.

Fig. 4 zeigt die beiden Walzen 15a, 15b und den dazwischen geführten Schlauch 3, wobei in einem Innenraum 19 des Schlauchs 3 eine Walkvorrichtung 20 angeordnet ist. Mit 18 ist der Strömrichtung des Harzes 4 bezeichnet. Die gefaltete Innenlage 6 wird unterhalb der Walkvorrichtung 20 hindurchgeführt. Die Walkvorrichtung 20 ist durch zwei über ein Kippgelenk 21 miteinander verbundene federnde Bügelbleche 22 gebildet, an deren Enden jeweils eine kleine Walze 23 drehbar gelagert ist. Der Schlauch 3 wird im Gegensatz zu dem Walzenpaar allein (Fig. 1) an beiden Schlauchseiten zwischen Außenlage 5 und Zwischenlage 7 bzw. Innenlage 6 einzeln gewalkt, wodurch Restluft wirkungsvoller aus den Schlauchlagen 5, 6, 7 rausgepreßt werden kann. Bei geeigneter Geometrie und Anordnung der Walzen 15, 23 und der Bügelbleche 22 können diese auch unmittelbar aufeinander aufliegend gehalten sein, so daß kein Kippgelenk 21 erforderlich ist.

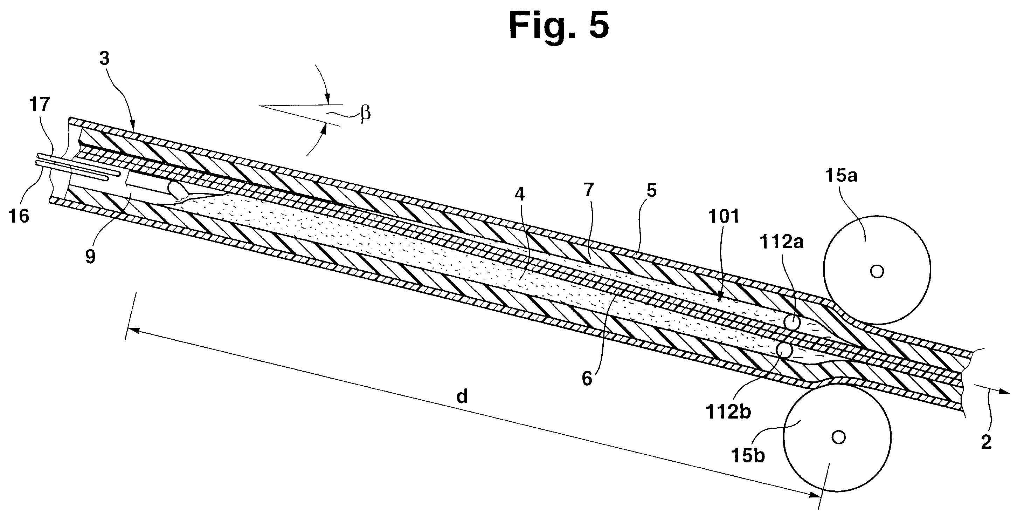

In den Fign. 5 bis 7 ist eine zweite Ausführungsform einer Imprägniervorrichtung 101 gezeigt, bei der die Innenlage 6 auf andere Weise zumindest am Ende der Imprägnierstrecke d beabstandet zur Zwischenlage 7 in Förderrichtung 2 geführt ist.

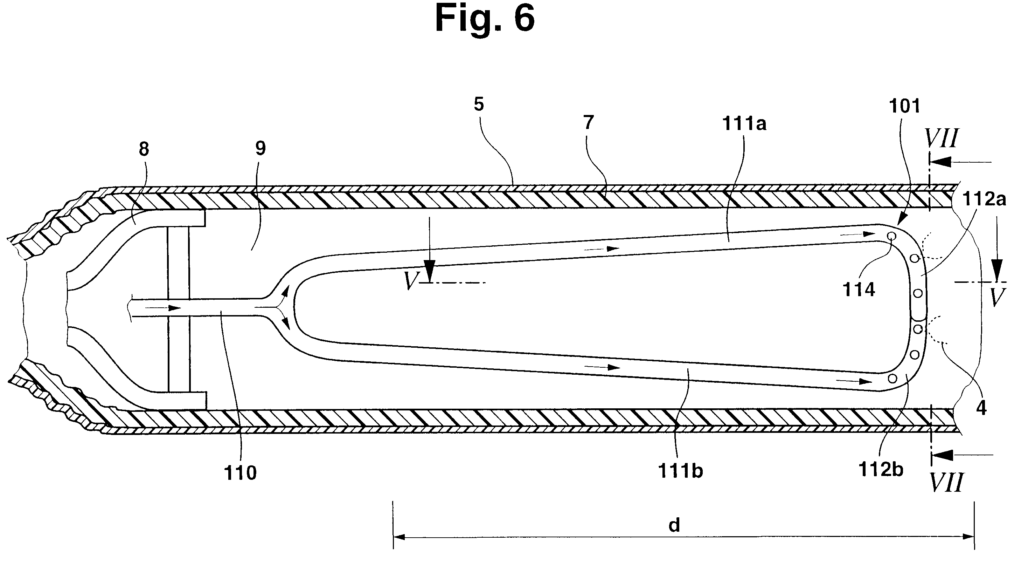

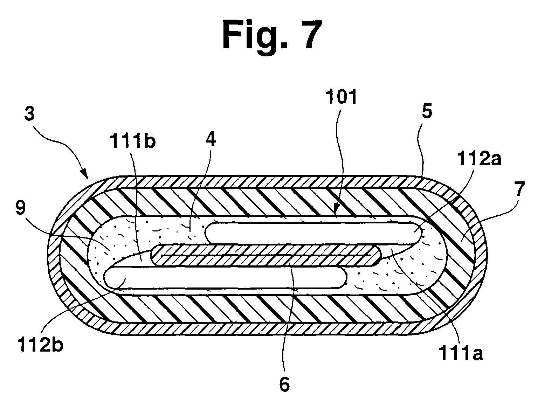

Wie Fig. 6 zeigt, gabelt sich die Harzleitung 110 nach außen in zwei Arme 111a und 111b, die die Innenlage 6 seitlich klammerförmig umgreifen und deren nach innen abgewinkelte Schenkel 112a, 112b einander übergreifen. Entsprechend der in Fig. 7 gezeigten Querschnittsansicht übergreift der Schenkel 112a des einen Arms 111a die zusammengefaltete Innenlage 6, während der Schenkel 112b des anderen Arms 111b die Innenlage 6 untergreift. Dadurch ist die Innenlage 6 einerseits zwischen den beiden Schenkeln 112a, 112b flach geführt und andererseits zwischen den beiden Armen 111a, 111b auch seitlich geführt. Durch die klammerförmige Harzleitung 110 sind keine separaten Teile zum Beabstanden der Innenfolie 6 zur Zwischenlage 7 erforderlich, und nehmen die Abzugskräfte deutlich ab. Außerdem sind Herstellungs- und Reinigungsarbeiten ebenfalls deutlich reduziert.

Über oben und unten an den Schenkeln 112a, 112b vorhandene Austrittsöffnungen 114 kann das Harz 4 in den Innenraum 9 des Schlauchs 3 ausströmen, wodurch die Zwischenlage 7 mit Harz 4 getränkt wird. Der Harzfluß innerhalb der Harzleitung 110 ist über Pfeile gekennzeichnet.

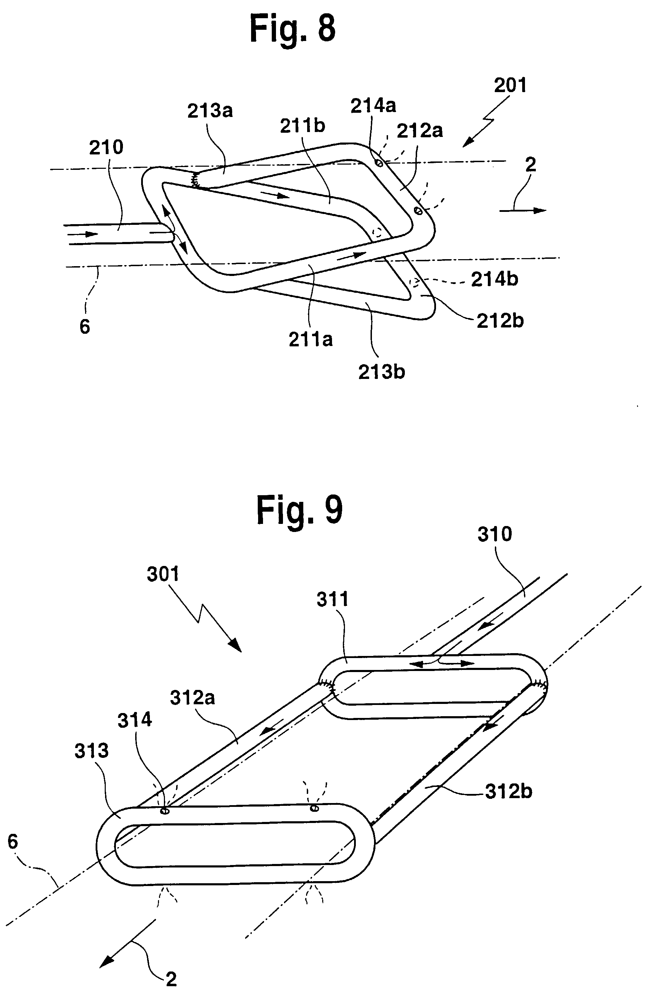

In Fig. 8 ist eine weitere Ausführungsform einer Imprägniervorrichtung 201 gezeigt, bei der - im Gegensatz zur Ausführungsform nach den Fign. 5 bis 7 - die freien Enden 213a, 213b der Schenkel 212a, 212b am jeweils anderen Arm 211b bzw. 211a der Harzleitung 210 angeschweißt sind. Dadurch ergibt sich eine ringsum in sich geschlossene Führung für die in Förderrichtung 2 durch die Imprägniervorrichtung 301 geförderte Innenlage 6. Über Austrittsöffnungen 214a und 214b für das Harz oberhalb und unterhalb der Innenlage 6 wird diese durch den jeweils über und unter ihr befindlichen Harzsee von der Zwischenlage des Schlauchs beabstandet gehalten.

Bei der in Fig. 9 gezeigten Ausführungsform einer Imprägniervorrichtung 301 sind zwei ringförmige, über seitliche Abstandshalter 312a, 312b in Förderrichtung 2 beabstandete Führungen 311 und 313 für die flache Innenlage 6 vorgesehen. In diesen Führungen 311, 313 und Abstandshaltern 312a, 312b wird das Harz in der Harzleitung 310 bis zur vorderen Führung 313 geleitet, wo es über obere und untere Austrittsöffnungen 314 in den Innenraum des Schlauchs ausströmt.

## Patentansprüche

1. Verfahren zum Imprägnieren eines mehrlagigen Schlauchs (3), insbesondere zur Sanierung von im Erdreich verlegten Kanalrohren, wobei der etwa horizontal ausgerichtete Schlauch (3) in axialer Richtung (2) gefördert wird und eine zwischen einer jeweils im Querschnitt geschlossenen Außen- (5) und Innenlage (6) befindliche Zwischenlage (7) aufweist, welche in Förderrichtung (2) auf einer Imprägnierstrecke (d) mit aushärtbarem Material, insbesondere Harz (4), getränkt wird,
dadurch gekennzeichnet,
daß zumindest die Zwischenlage (7) des Schlauchs (3) auf der Imprägnierstrecke (d) rechtwinklig zur Förderrichtung (2), insbesondere etwa senkrecht, vorzugsweise flach, zusammengedrückt oder zusammengezogen gefördert wird und
daß auf der Imprägnierstrecke (d) aushärtbares Material in einen zwischen Innenlage (6) und Zwischenlage (7) befindlichen Innenraum (9) eingeleitet wird, wobei die Innenlage (6) zumindest auf einem Abschnitt der Imprägnierstrecke (d) von der Zwischenlage (7) beabstandet ist.

2. Verfahren zum Imprägnieren eines mehrlagigen Schlauchs (3), insbesondere zur Sanierung von im Erdreich verlegten Kanalrohren, wobei der etwa horizontal ausgerichtete Schlauch (3) in axialer Richtung (2) gefördert wird und eine zwischen einer jeweils im Querschnitt geschlossenen Außen- (5) und Innenlage (6) befindliche Zwischenlage (7) aufweist, welche in Förderrichtung (2) auf einer Imprägnierstrecke (d) mit aushärtbarem Material, insbesondere Harz (4), getränkt wird, insbesondere nach Anspruch 1,
dadurch gekennzeichnet,
daß auf der Imprägnierstrecke (d) aushärtbares Material in einen zwischen Innenlage und Zwischenlage (7) befindlichen Innenraum (9) eingeleitet wird und
daß vor der Imprägnierstrecke (d) in dem Innenraum (9) ein Unterdruck erzeugt wird.

3. Imprägnierverfahren nach Anspruch 1 oder 2, dadurch gekennzeichnet, daß im Innenraum (9) befindliches überschüssiges aushärtbares Material am Ende der Imprägnierstrecke (d) in Förderrichtung (2) durch Zusammenpressen oder -ziehen des Schlauchs (3) zurückgehalten wird.

4. Imprägnierverfahren nach einem der vorhergehenden Ansprüche, dadurch gekennzeichnet, daß der Schlauch (3) auf der Imprägnierstrecke (d) in Förderrichtung (2) geneigt (0<β≤90°) ausgerichtet ist.

5. Imprägnierverfahren nach einem der vorhergehenden Ansprüche, dadurch gekennzeichnet, daß das Einleiten des aushärtbaren Materials in den Innenraum (9) erst am Ende der Imprägnierstrecke (d) erfolgt.

6. Vorrichtung (1; 101; 201; 301) zum Imprägnieren einer Zwischenlage (7) eines mehrlagigen Schlauchs (3), insbesondere zur Sanierung von im Erdreich verlegten Kanalrohren, wobei der Schlauch (3) etwa horizontal ausgerichtet durch die Imprägniervorrichtung (1) in axialer Richtung (2) gefördert wird und eine zwischen einer jeweils im Querschnitt geschlossenen Außen- (5) und Innenlage (6) befindliche Zwischenlage (7) aufweist, welche in Förderrichtung (2) auf einer Imprägnierstrecke (d) mit aushärtbarem Material, insbesondere Harz (4), getränkt wird, insbesondere zur Durchführung des Imprägnierverfahrens nach einem der Ansprüche 1 bis 5,
gekennzeichnet durch
eine zumindest die Zwischenlage (7) auf der Imprägnierstrecke (d) in eine rechtwinklig zur Förderrichtung (2), insbesondere etwa senkrecht, zusammengedrückte oder zusammengezogene Lage zwingende Einrichtung und
eine in einem Innenraum (9) zwischen Innenlage (6) und Zwischenlage (7) angeordnete Leitung (10; 110; 210; 310), die das aushärtbare Material über mindestens eine Austrittsöffnung (14; 114; 214a, 214b; 314) in den Innenraum (9) einleitet.

7. Imprägniervorrichtung nach Anspruch 6, dadurch gekennzeichnet, daß die Einrichtung ein vor der Imprägnierstrecke (d) im Innenraum (9) angeordnetes Aufweitungselement (8) ist.

8. Imprägniervorrichtung nach Anspruch 6 oder 7, dadurch gekennzeichnet, daß im Innenraum (9) ein die Innenlage (6) zumindest auf einem Abschnitt der Imprägnierstrecke (d) von der Zwischenlage (7) beabstandender Abstandshalter vorgesehen ist.

9. Imprägniervorrichtung nach Anspruch 8, dadurch gekennzeichnet, daß der Abstandshalter durch die im Innenraum (9) oberhalb der Innenlage (6) angeordnete Leitung (10; 110; 310) gebildet ist.

10. Imprägniervorrichtung nach Anspruch 9, dadurch gekennzeichnet, daß die Leitung (10; 310) oberhalb der Innenlage (6) angeordnet ist.

11. Imprägniervorrichtung nach einem der Ansprüche 6 bis 10, dadurch gekennzeichnet, daß die Leitung (110) zwei Arme (111a, 111b; 211a, 211b) aufweist, zwischen denen die Innenlage (6) geführt ist.

12. Imprägniervorrichtung nach Anspruch 11, dadurch gekennzeichnet, daß sich die Harzleitung (110; 210) nach außen in die zwei Arme (111a, 111b; 211a, 211b) gabelt, deren nach innen gerichtete Schenkel (112a, 112b; 212a, 212b) sich übergreifen, vorzugsweise klammerförmig umgreifen.

13. Imprägniervorrichtung nach Anspruch 12, dadurch gekennzeichnet, daß die freien Enden (213a, 213b) der Schenkel (212a, 212b) mit dem jeweils anderen Arm (212b, 212a) verbunden sind.

14. Imprägniervorrichtung nach einem der Ansprüche 6 bis 13, dadurch gekennzeichnet, daß sich die Leitung (10; 110; 210; 310) über nahezu die gesamte Breite des Innenquerschnitts der zusammengedrückten oder zusammengezogenen Zwischenlage (7) erstreckt.

15. Imprägniervorrichtung nach einem der Ansprüche 6 bis 14, dadurch gekennzeichnet, daß Austrittsöffnungen (114; 214a, 214b; 314) für das aushärtbare Material oberhalb und unterhalb der Innenlage (6) vorgesehen sind.

16. Imprägniervorrichtung nach einem der Ansprüche 6 bis 15, dadurch gekennzeichnet, daß die mindestens eine Austrittsöffnung (14; 114; 214a, 214b; 314) der Leitung (10; 110; 210; 310) an ihrem in Förderrichtung (2) hinteren Ende vorgesehen ist.

17. Imprägniervorrichtung nach einem der Ansprüche 6 bis 16, dadurch gekennzeichnet, daß mindestens zwei in Förderrichtung (2) hintereinander angeordnete Führungen (311; 313) für die Innenfolie (6) vorgesehen sind.

18. Vorrichtung (1; 101; 201; 301) zum Imprägnieren einer Zwischenlage (7) eines mehrlagigen Schlauchs (3), insbesondere zur Sanierung von im Erdreich verlegten Kanalrohren, wobei der Schlauch (3) etwa horizontal ausgerichtet durch die Imprägniervorrichtung (1) in axialer Richtung (2) gefördert wird und eine zwischen einer jeweils im Querschnitt geschlossenen Außen- (5) und Innenlage (6) befindliche Zwischenlage (7) aufweist, welche in Förderrichtung (2) auf einer Imprägnierstrecke (d) mit aushärtbarem Harz (4) getränkt wird, insbesondere zur Durchführung des Imprägnierverfahrens nach einem der Ansprüche 1 bis 5 und insbesondere nach einem der Ansprüche 6 bis 17,
dadurch gekennzeichnet,
daß ein auf der Imprägnierstrecke (d) mit Harz (4) gefüllter Innenraum (9) des Schlauchs (3) vor der Imprägnierstrecke (d), vorzugsweise über eine Unterdruckleitung (16), evakuierbar ist.

19. Imprägniervorrichtung nach Anspruch 18, dadurch gekennzeichnet, daß im Innenraum (9) der Zwischenlage (7), vorzugsweise möglichst unmittelbar, vor der Imprägnierstrecke (d), eine Druckmeßeinrichtung (17) vorgesehen ist.
